# EUROPEAN PATENT SPECIFICATION

(11) **EP 4 201 720 B1**
(45) Date of publication and mention of the grant of the patent: **04.03.2026**
(21) Application number: 22213425.6
(22) Date of filing: 14.12.2022
(51) Int. Cl.: B60K 1/00, B60K 17/04, B60K 1/04

(54) **VEHICLE**
FAHRZEUG
VÉHICULE

(30) Priority: 21.12.2021 JP 2021207433
(43) Date of publication of application: 28.06.2023
(73) Proprietor: Yamaha Hatsudoki Kabushiki Kaisha, Iwata-shi, Shizuoka 438-8501 (JP)
(72) Inventor: Osawa, Kensuke, Iwata-shi, Shizuoka-ken, 438-8501 (JP); Takata, Kazunari, Iwata-shi, Shizuoka-ken, 438-8501 (JP); Yasuda, Atsushi, Iwata-shi, Shizuoka-ken, 438-8501 (JP); Yoshida, Masahiro, Iwata-shi, Shizuoka-ken, 438-8501 (JP); Higashiyama, Kenta, Iwata-shi, Shizuoka-ken, 438-8501 (JP); Kamada, Kensuke, Iwata-shi, Shizuoka-ken, 438-8501 (JP); Umekita, Seiji, Iwata-shi, Shizuoka-ken, 438-8501 (JP); Miyake, Yasuo, Iwata-shi, Shizuoka-ken, 438-8501 (JP)
(74) Representative: Grünecker Patent- und Rechtsanwälte PartG mbB

(56) References cited:
- EP-A1- 2 799 320
- US-A1- 2013 270 023
- US-A1- 2015 251 716
- US-A1- 2015 314 692
- US-A1- 2015 329 175
- US-A1- 2020 031 425

## Description

The present invention relates to vehicles, and more specifically to electric ATVs (All Terrain Vehicles) and the like.

The prior art document US 2020/0031425 A1 discloses a vehicle provided with a pair of upper frames spaced apart in a left-right direction of the vehicle, a pair of lower frames spaced apart in the left-right direction of the vehicle, a front frame connecting front portions of the pair of upper frames with the pair of lower frames and a rear frame connecting rear portions of the pair of upper frames with rear portions of the pair of lower frames. Said vehicle is provided with a rear wheel and a drive motor to drive the rear wheel. A battery is configured to supply electric power to the drive motor and an endless power transmission member is configured to connect the drive motor with the rear wheel. A pivot shaft is attached to the rear frame and extending in a widthwise direction of the vehicle. A swing arm is supported pivotably by the pivot shaft and supporting the rear wheel. The drive motor is 15 located farther forward than the swing arm with regard to a fore-aft direction of the vehicle. The prior art document US 2015/0251716 A1 discloses a vehicle comprising a pair of upper frames spaced apart in a left-right direction of the vehicle, a pair of lower frames spaced apart in the left-right direction of the vehicle and a front frame connecting front portions of the pair of upper frames with the pair of lower frames. A drive motor stored in a motor unit case is provided to drive a rear wheel. The motor unit case is connecting rear portions of the pair of upper frames with rear portions of the pair of lower frames. A battery is configured to supply electric power to the drive motor. An endless power transmission member is configured to connect the drive motor with the rear wheel. A pivot shaft is attached to the motor unit case and extending in a widthwise direction of the vehicle. A swing arm is supported pivotably by the pivot shaft and supporting the rear wheel. The drive motor is partly located farther forward than the swing arm with regard to a fore-aft direction of the vehicle. A storage space for storing the battery is defined between a front wheel and the rear wheel. More specifically, the storage space is provided rearward relative to a head pipe and forward relative to the motor unit case as a region surrounded by the upper frames, the lower frames, the front frame and the motor unit case in a side view of the vehicle and constitutes an open space defined by the upper frames, the lower frames, the front frame and the motor unit case and has a shape and a size for the battery to be installed therein.

JP 5509811 B discloses an electric rough terrain vehicle which is pertinent to conventional techniques of this kind. The vehicle includes a steering shaft which is supported pivotably at a front portion of a vehicle frame; a left-right pair of front wheels steered by means of the steering shaft; a left-right pair of swing arms supported pivotably by the vehicle frame; a left-right pair of rear wheels supported on their shafts by the swing arms; a left-right pair of electric motors disposed between the left and right front wheels for driving the left and right front wheels respectively; a left-right pair of electric motors disposed between the left and right rear wheels for driving the left and right rear wheels respectively; and a battery disposed between the front and the rear wheels.

Also, JP 4214759 B discloses a four-wheeled electric rough terrain vehicle. The vehicle includes an electric motor disposed at a position near a rear portion of a body frame; a pair of rear wheels to which an output from the electric motor is transmitted via a gear case; a plurality of batteries provided in line in a fore-aft direction at a generally intermediate portion of the body frame; and a controller disposed ahead of the batteries.

According to JP 5509811 B, the electric motors which drive the rear wheels are disposed between the pair of swing arms, that is, layout of the electric motors are limited by the pair of swing arms. JP 5509811 B discloses nothing about configurations for transmitting the output from the electric motor to the rear wheels via an endless power transmission member.

According to JP 4214759 B, the electric motor which drives the rear wheel is disposed on a side of a gear case which also functions as a swing arm, that is, layout of the electric motor is limited by the gear case. Also, JP 4214759 B discloses nothing about configurations for transmitting the output from the electric motor to the rear wheels via an endless power transmission member.

It is the object of the present invention to provide a vehicle that is able to provide greater freedom in the layout of a drive motor that uses an endless power transmission member.

According to the present invention said object is solved by a vehicle as defined by claim 1. Preferred embodiments are laid down in the dependent claims.

According to the invention, a vehicle includes a pair of upper frames spaced apart in a left-right direction, a pair of lower frames spaced apart in a left-right direction, a front frame connecting front portions of the pair of upper frames with the pair of lower frames, a rear frame connecting rear portions of the pair of upper frames with rear portions of the pair of lower frames, a pair of rear wheels, a drive motor to drive the pair of rear wheels, a battery to supply electric power to the drive motor, an endless power transmission member to connect the drive motor with the pair of rear wheels, a pivot shaft attached to the rear frame and extending in a widthwise direction of the vehicle, and a swing arm supported pivotably by the pivot shaft and supporting the pair of rear wheels. In the vehicle, the drive motor is located farther forward than the swing arm. According to the invention, the drive motor and the pair of rear wheels are connected with each other via the endless power transmission member, and the drive motor is located farther forward than the swing arm. Therefore, in a configuration utilizing an endless power transmission member, layout of the drive motor is not limited by the swing arm, i.e., it is possible to increase the freedom in the layout of the drive motor.

Preferably, the power transmission member is located inward of the rear frame in a width direction of the vehicle. In this case, it is possible to make effective use of a space that is outward of the rear frame.

Further preferably, a widthwise length of the drive is less than an end-to-end length of the pivot shaft. In this case, it is possible to reduce the dimension of the drive motor in the widthwise direction of the vehicle, thus making it possible to utilize the space on the side of the drive motor effectively.

According to the invention, the vehicle further includes a motor fixing bracket between an output side of the drive motor and the lower frame to fix the drive motor to the lower frame. In this case, it is possible to easily fix the drive motor to the lower frame via the motor fixing bracket.

Preferably, the vehicle further includes a power transmission member cover attached to the motor fixing bracket to cover the power transmission member. In this case, by attaching the power transmission member cover directly to the motor fixing bracket, it is possible to decrease the number of parts.

According to the invention, both sides of the drive motor is fixed to the pair of lower frames. In this case, the arrangement increases mounting rigidity of the drive motor, thus making it possible to reduce wobble of the drive motor and further stabilize operation of the drive motor.

According to the present invention, the drive motor is located in a region surrounded by the upper frames, the lower frames, the front frame, and the rear frame in a side view. In this case, the drive motor is attachable/detachable from a side of the vehicle, i.e., the arrangement makes assembly and maintenance operations easy.

According to the invention, the drive motor is located forward of the rear frame in a side view. In this case, it is possible to dispose heavy components at/around the vehicle's center of gravity, thus concentrating a mass of the vehicle. Also, it is possible to select a size of the drive motor without limitation posed by the swing arm.

Further preferably, the vehicle further includes a transmission provided between the drive motor and the power transmission member to change a speed of an output from the drive motor. In this case, it is possible to efficiently utilize the drive motor, and improve electricity consumption and travel distance. Also, an output shaft of the transmission is able to simply be connected directly with the power transmission member. Therefore, the arrangement makes it possible to improve the freedom of layout of the drive motor.

Further preferably, the vehicle further includes a straddled seat provided at a higher position than the drive motor, and a bar handle provided at a higher position than the straddled seat. The structure described above is suitably applied to an ATV.

It is noted that, in preferred embodiments, the "transmission" is not limited to those components commonly referred to as a transmission but includes speed reducers and continuously variable transmissions (CVTs).

The above and other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is a side view which shows a vehicle according to a preferred embodiment.
Fig. 2 is a plan view which shows the vehicle in Fig. 1.
Fig. 3 is a perspective view which shows the vehicle with exterior components removed.
Fig. 4 is a front view which shows the vehicle in Fig. 3.
Fig. 5 is a side view which shows the vehicle in Fig. 3 viewed from the left.
Fig. 6 is a side view which shows the vehicle in Fig. 3 viewed from the right.
Fig. 7 is a plan view which shows the vehicle in Fig. 3.
Fig. 8 is a bottom view which shows the vehicle in Fig. 3.
Fig. 9 is an illustrative sectional view taken along line A-A in Fig 7.
Fig. 10 is an enlarged plan view which shows a top portion and surroundings thereof of a drive motor.
Fig. 11 is a sectional view taken along line B-B in Fig. 10.
Figs. 12A and 12B are diagrammatic representations which show a vehicle according to another preferred embodiment, wherein Fig. 12A is a front view and Fig. 12B is a plan view.
Figs. 13A and 13B are diagrammatic representations which show a vehicle according to still another preferred embodiment, wherein Fig. 13A is a front view and Fig. 13B is a plan view.
Figs. 14A and 14B are diagrammatic representations which show a vehicle according to still another preferred embodiment, wherein Fig. 14A is a front view and Fig. 14B is a plan view.

### DETAILED DESCRIPTION OF THE PREFERRED EMBODIMENTS

Hereinafter, preferred embodiments will be described with reference to the drawings. It should be noted here that the terms front and rear, left and right, and up and down used in the preferred embodiments refer to front and rear, left and right, and up and down based on the state where a driver of the vehicle 10 is seated in a straddled seat 82 (which will be described below), facing a bar handle 50 (which will be described below). In the drawings, "Fr" indicates forward, "Rr" indicates rearward, "R" indicates rightward, "L" indicates leftward, "U" indicates upward, and "Lo" indicates downward. Accordingly, a fore-aft direction of the vehicle extends from rearward Rr to forward Fr and vice versa. A left-right direction of the vehicle extends from the rightward R to leftward L and vice versa. The left-right direction of the vehicle is synonymous to the widthwise direction of the vehicle. An upward-downward direction of the vehicle extends from upward U to downward and vice versa. The upward-downward direction of the vehicle is synonymous to the vertical direction of the vehicle.

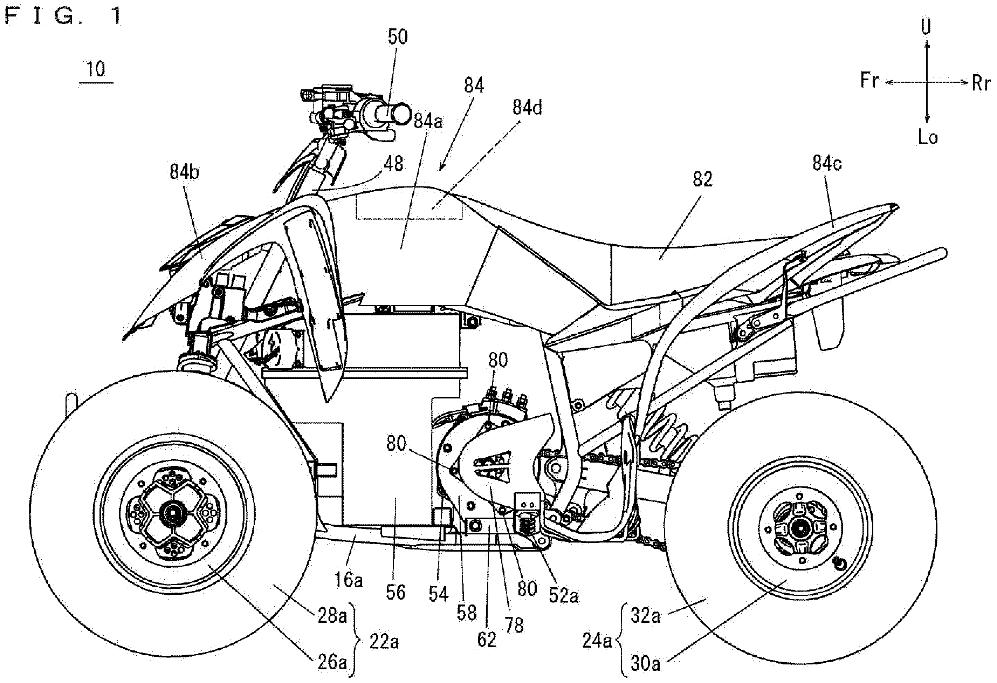

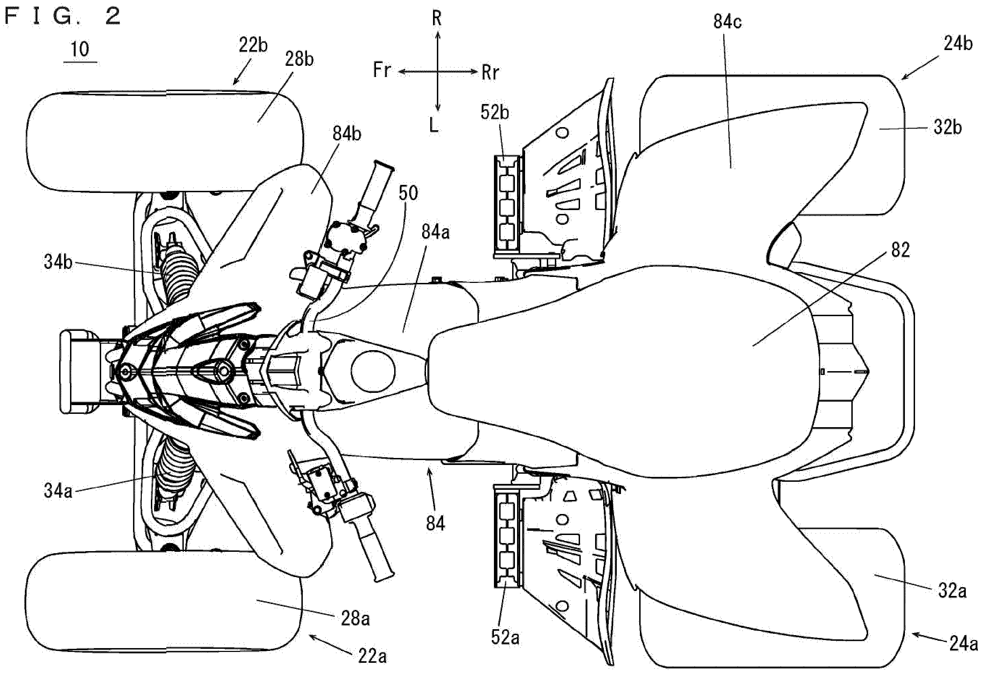

Referring to Fig. 1 and Fig. 2, a vehicle 10 according to a preferred embodiment is an electric ATV which carries one person.

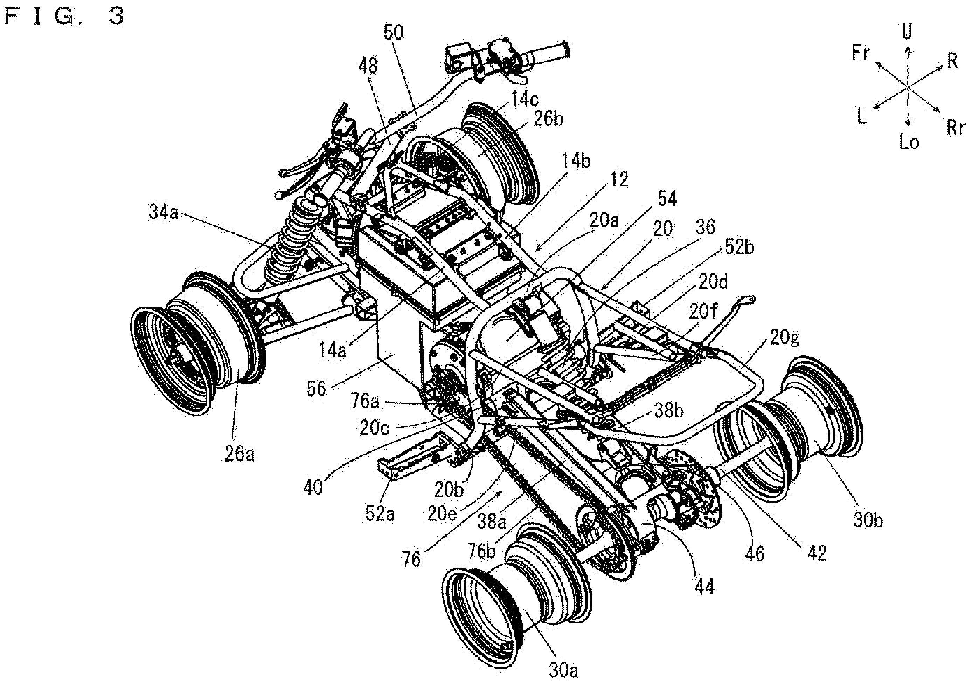

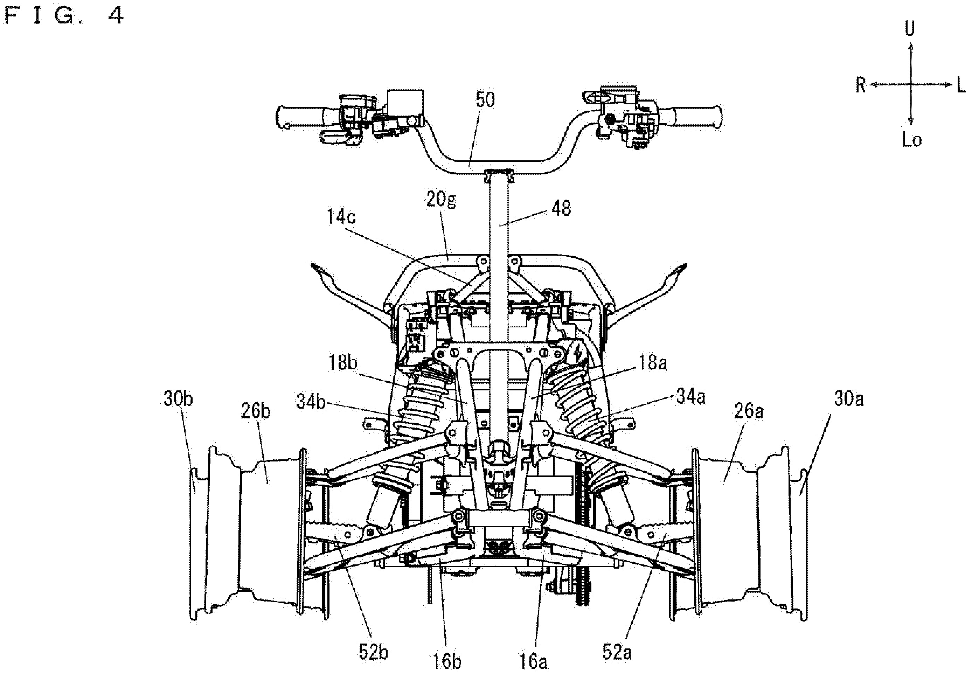

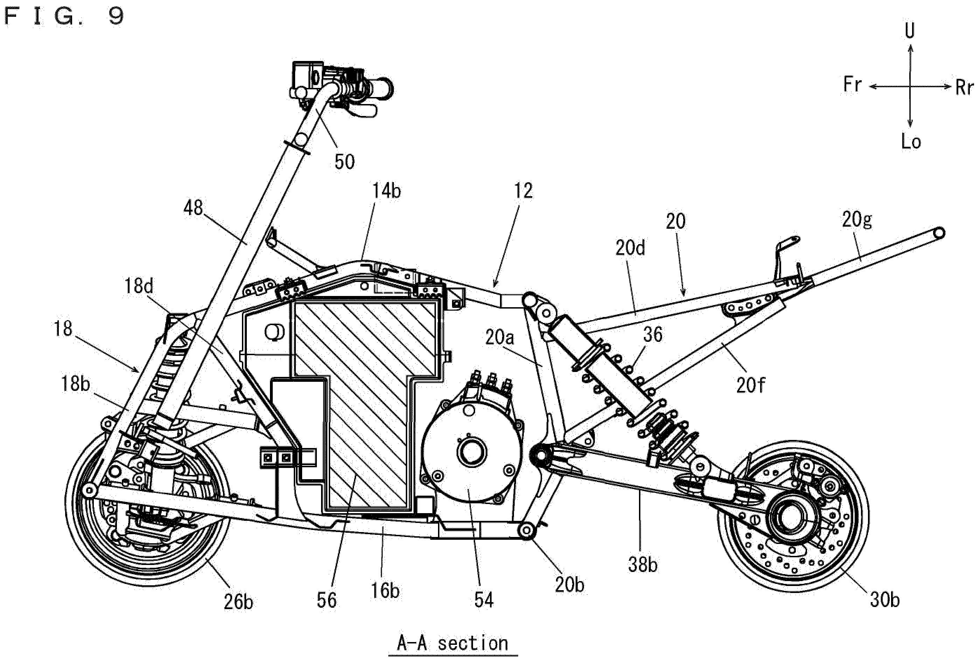

Referring to Fig. 3 through Fig. 9, the vehicle 10 includes a body frame 12. The body frame 12 includes a pair of upper frames 14a, 14b, a pair of lower frames 16a, 16b, a front frame 18, and a rear frame 20.

The pair of upper frames 14a, 14b extend in a fore-aft direction at a distance from each other in a left-right direction, with their intermediate portions having an inverted V-shape in a side view so as to slightly protrude upward. The pair of upper frames 14a, 14b have their generally intermediate portions connected by a support frame 14c which supports a steering shaft 48 (which will be described below). The support frame 14c is generally V-shaped, and is provided on the pair of upper frames 14a, 14b to extend forward and diagonally upward in a side view.

The pair of lower frames 16a, 16b extend in a fore-aft direction below the pair of upper frames 14a, 14b, at a distance from each other in a left-right direction such that the distance between the pair is greater between rearward portions than between forward portions.

The front frame 18 connects front portions of the pair of upper frames 14a, 14b to the pair of lower frames 16a, 16b. More specifically, the front frame 18 includes a pair of first frames 18a, 18b which connect the front portions of the pair of upper frames 14a, 14b with front portions of the pair of lower frames 16a, 16b; and a pair of second frames 18c, 18d which connect the front portions of the pair of upper frames 14a, 14b with generally intermediate portions of the pair of lower frames 16a, 16b. The pair of second frames 18c, 18d function as reinforcing members.

The rear frame 20 connects rear portions of the pair of upper frames 14a, 14b to rear portions of the pair of lower frames 16a, 16b. More specifically, the rear frame 20 includes a third frame 20a which is generally U-shaped in a rear view and generally V-shaped in a side view and connects the rear portions of the pair of upper frames 14a, 14b to the rear portions of the pair of lower frames 16a, 16b; a cross member 20b which connects two end portions of the third frame 20a; a pair of fourth frames 20c, 20d which extend rearward and slightly upward from upper portions of both sides of the third frame 20a; a pair of fifth frames 20e, 20f which extend rearward and upward from generally intermediate portions in both sides of the third frame 20a; and a sixth frame 20g which is generally U-shaped. The sixth frame 20g is located so that its first end portion is sandwiched by a rear end portion of the fourth frame 20c and a rear end portion of the fifth frame 20e while its second end portion is sandwiched by a rear end portion of the fourth frame 20d and a rear end portion of the fifth frame 20f.

A pair of front wheels 22a, 22b are provided near a front portion of the body frame 12 and a pair of rear wheels 24a, 24b are provided near a rear portion of the body frame 12 (see Fig. 1 and Fig. 2). The front wheels 22a, 22b include wheels 26a, 26b and tires 28a, 28b assembled to the wheels 26a, 26b respectively. Likewise, the rear wheels 24a, 24b include wheels 30a, 30b and tires 32a, 32b assembled to the wheels 30a, 30b respectively.

The pair of front wheels 22a, 22b are connected to the body frame 12 via suspensions 34a, 34b respectively.

The pair of rear wheels 24a, 24b are connected to the body frame 12 via a suspension 36, swing arms 38a, 38b and so on. In other words, two side portions of the third frame 20a of the rear frame 20 are connected with each other via a pivot shaft 40 which extends widthwise of the vehicle. The rear wheels 24a, 24b are connected with each other by an axle 42 which extends widthwise of the vehicle. At an intermediate portion of the axle 42, an arm support portion 44 is attached rotatably with respect to the axle 42. The pivot shaft 40 and the arm support portion 44 are connected with each other by the swing arms 38a, 38b extending in a fore-aft direction at a space in a left-right direction from each other. The swing arms 38a, 38b are supported pivotably by the pivot shaft 40 and support the pair of rear wheels 24a, 24b via the arm support portion 44. The swing arms 38a, 38b have their rear portions connected with each other by a connecting portion 46. The suspension 36 is provided at an intermediate portion in the vehicle's widthwise direction, and connects the third frame 20a with the connecting portion 46.

A steering shaft 48 is provided to extend through a space between the pair of upper frames 14a, 14b. The steering shaft 48 has its lower end portion connected with the pair of first frames 18a, 18b of the front frame 18. The steering shaft 48 is supported, at a position slightly higher than its intermediate portion, by the support frame 14c. A bar handle 50 to steer the pair of front wheels 22a, 22b is attached to an upper end portion of the steering shaft 48. The bar handle 50 is provided at a higher position than the straddled seat 82. When the bar handle 50 is operated, the steering shaft 48 is rotated to steer the front wheels 22a, 22b via an unillustrated pair of tie rods.

A pair of steps 52a, 52b are attached to two end portions of the third frame 20a of the rear frame 20 to extend outward of the vehicle.

The body frame 12 supports a drive motor 54 which drives the pair of rear wheels 24a, 24b, and a battery 56 which supplies electric power to the drive motor 54. The drive motor 54 and the battery 56 are provided on the pair of lower frames 16a, 16b. The drive motor 54 is behind the battery 56, at a location farther forward than the swing arms 38a, 38b. In a side view, the drive motor 54 is forward of the rear frame 20. Preferably, the battery 56 is an interchangeable rechargeable battery.

The drive motor 54 includes an output shaft 54a. In order to fix the drive motor 54 to the lower frame 16a, a motor fixing bracket 58 is provided between an output side of the drive motor 54 and the lower frame 16a.

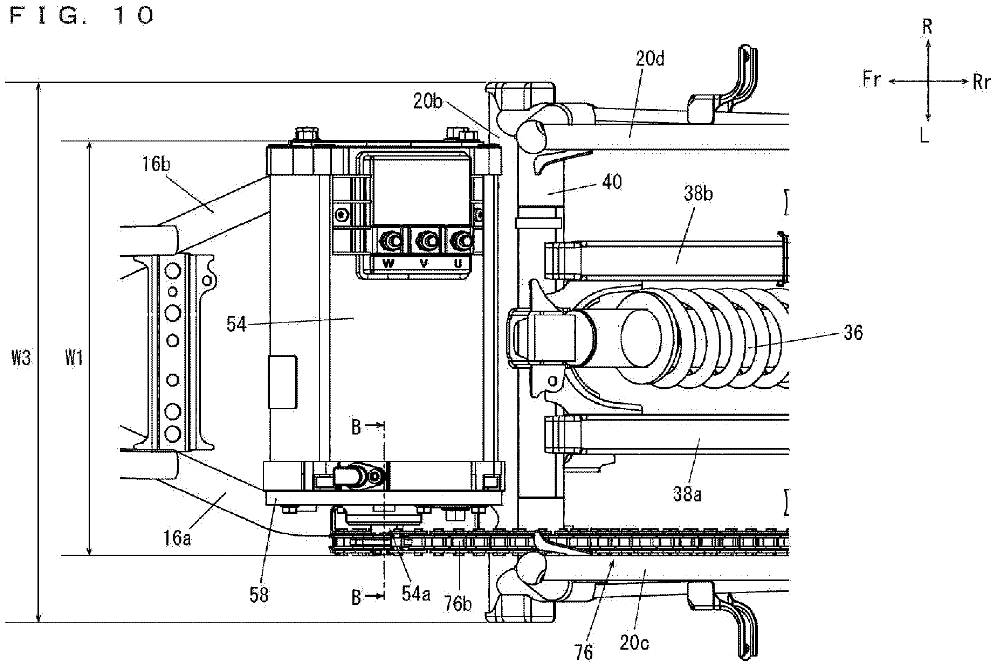

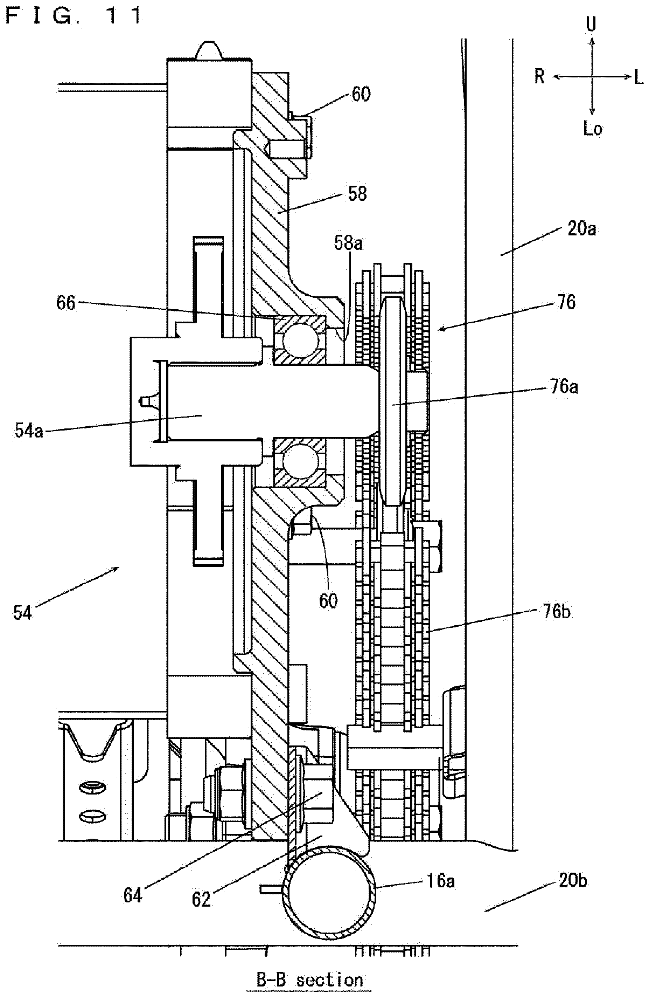

Referring also to Fig. 10 and Fig. 11, the motor fixing bracket 58 is attached to an output-side end portion (left end portion in the present preferred embodiment) of the drive motor 54 with a plurality (four in the present preferred embodiment) of fasteners 60. The motor fixing bracket 58 has its lower end portion connected with a flange portion 62 provided in the lower frame 16a with a plurality (two in the present preferred embodiment) of fasteners 64. The motor fixing bracket 58 includes a through-hole 58a, and the output shaft 54a of the drive motor 54 has its tip portion exposed from the through-hole 58a. The output shaft 54a is rotatable with respect to the motor fixing bracket 58 via a bearing 66.

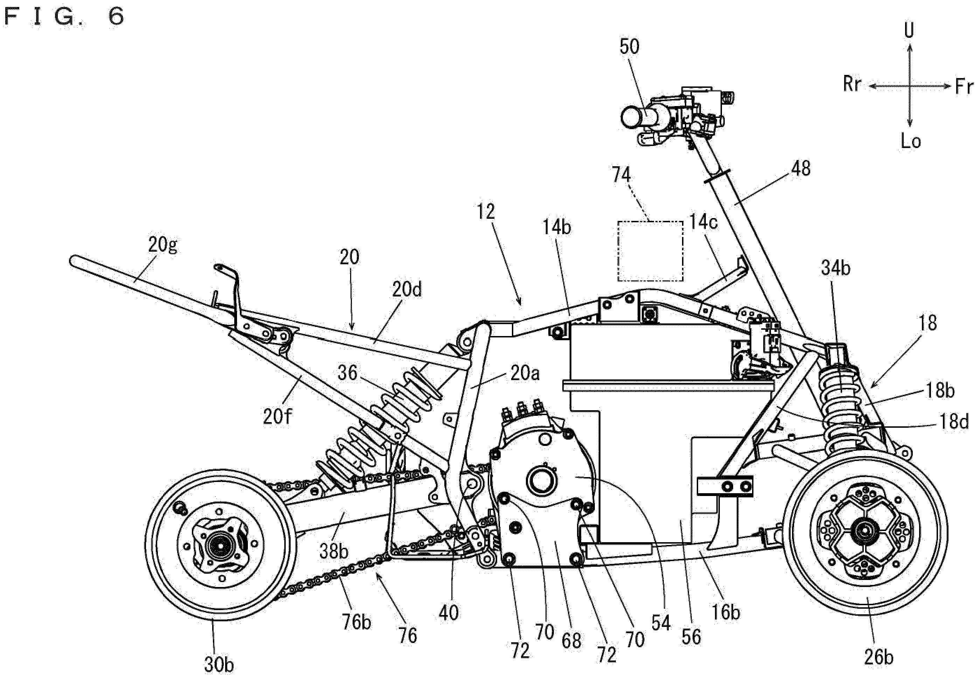

Referring to Fig. 6, a motor fixing bracket 68 is attached to a non-output-side end portion (right end portion in the present preferred embodiment), where the output shaft 54a is not provided, of the drive motor 54, with a plurality (two in the present preferred embodiment) of fasteners 70. The motor fixing bracket 68 is attached to the lower frame 16b with a plurality (two in the present preferred embodiment) of fasteners 72.

As described, the drive motor 54 is fixed to the pair of lower frames 16a, 16b and supported on its both sides by the motor fixing brackets 58, 68.

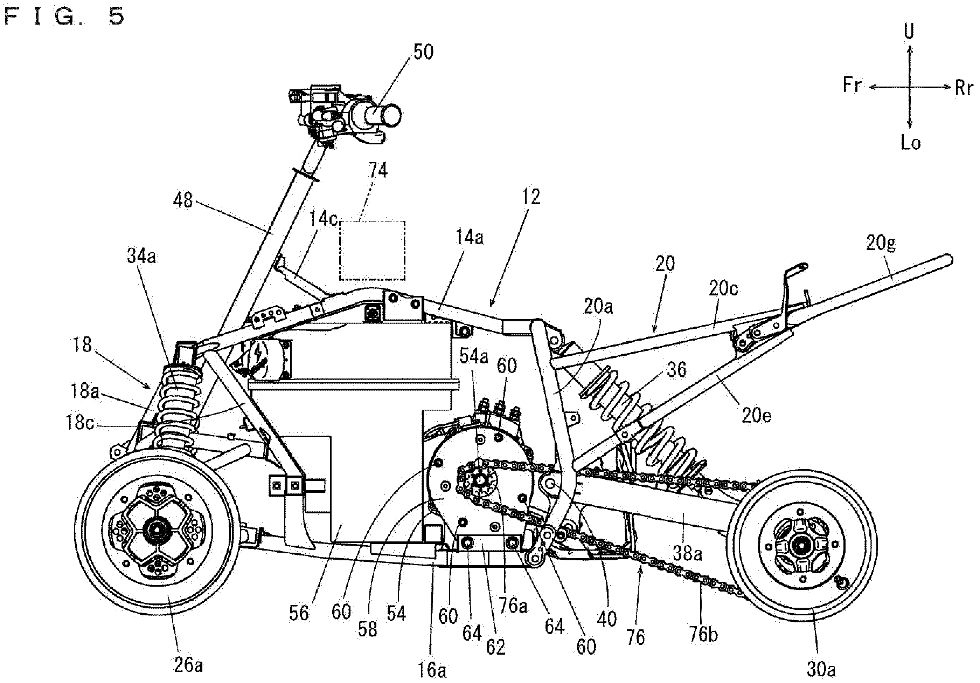

Referring to Fig. 5, Fig. 6 and Fig. 9, in a side view, the drive motor 54 and the battery 56 are located in a region which is surrounded by the upper frames 14a, 14b, the lower frames 16a, 16b, the pair of second frames 18c, 18d of the front frame 18, and the third frame 20a of the rear frame 20. The open space defined by the upper frames 14a, 14b, the lower frames 16a, 16b, the front frame 18, and the rear frame 20 has a shape and a size for each of the drive motor 54 and the battery 56 to be installed therein from a side. In the present preferred embodiment, the drive motor 54 and the battery 56 are located inside the region which is surrounded by the upper frames 14a, 14b, the lower frames 16a, 16b, the second frames 18c, 18d of the front frame 18, and the third frame 20a of the rear frame 20, and do not overlap these frames in a side view. In a side view, the drive motor 54 and the battery 56 do not protrude downward from the pair of lower frames 16a, 16b.

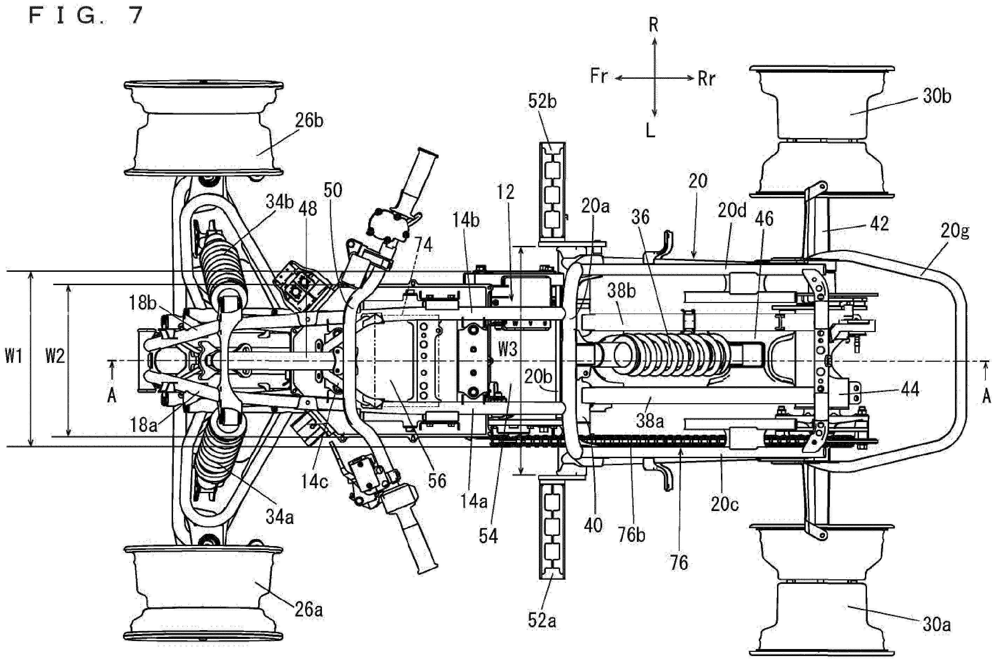

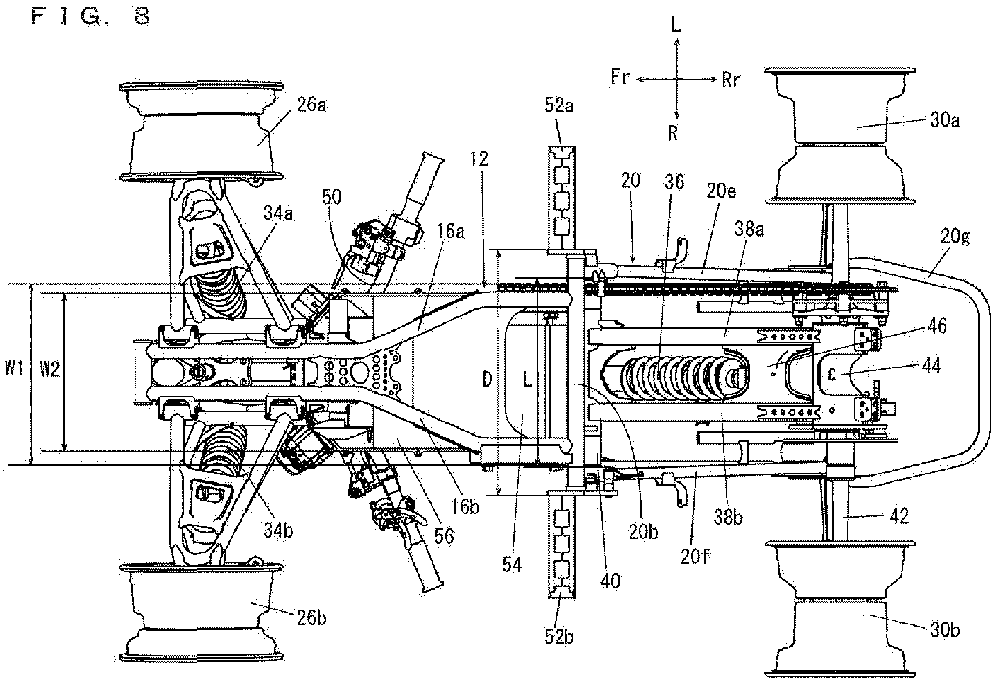

Referring to Fig. 7 and Fig. 8, the battery 56 is provided at a center location in the vehicle's width direction. The battery 56 overlaps the pair of lower frames 16a, 16b in a plan view. Referring further to Fig. 10, the drive motor 54 is slightly offset with respect to the vehicle's center (offset rightward in the present preferred embodiment) in the width direction. The drive motor 54 and the battery 56 have their respective widthwise lengths W1, W2 shorter than a widthwise dimension W3 of the rear frame 20 in a plan view. The drive motor 54 and the battery 56 are farther inward (inboard) in the vehicle width direction than the rear frame 20, and farther inward (inboard) in the vehicle width direction than the third frame 20a. The arrangement makes it easy for the driver of the vehicle to hold the vehicle body between his/her knees. In a plan view, the drive motor 54 and the battery 56 have their respective widthwise lengths W1, W2 shorter than an end-to-end length L of the pivot shaft 40. In a plan view, the drive motor 54 and the battery 56 have their respective widthwise lengths W1, W2 shorter than a distance D between the steps 52a, 52b. In this arrangement, when the driver puts his/her feet onto the steps 52a, 52b, the drive motor 54 and the battery 56 do not interfere with the driver, thus making it possible to enjoy a comfortable ride.

Referring to Fig. 5 through Fig. 7, a motor control unit (MCU) 74 is provided above the battery 56 in order to control the drive motor 54. The motor control unit 74 is supported by the pair of upper frames 14a, 14b via an unillustrated bracket.

The drive motor 54 and the pair of rear wheels 24a, 24b are connected with each other via an endless power transmission member 76. Power from the output shaft 54a is transmitted to the pair of rear wheels 24a, 24b via the power transmission member 76 to drive the pair of rear wheels 24a, 24b. The power transmission member 76 includes a sprocket 76a attached to the output shaft 54a, a sprocket (not illustrated) attached to the axle 42, and a chain 76b connecting the sprocket 76a and the axle-side sprocket with each other. Therefore, the power from the output shaft 54a is transmitted through the sprocket 76a, the chain 76b, and the axle-side sprocket, to the axle 42, and then to the pair of rear wheels 24a, 24b. The power transmission member 76, which includes the sprocket 76a, the chain 76b and the axle-side sprocket, is located farther inward in the vehicle width direction than the rear frame 20, and farther inward in the vehicle width direction than the third frame 20a. In order to cover the sprocket 76a of the power transmission member 76 and a portion of the chain 76b, a power transmission member cover 78 is attached to the motor fixing bracket 58 (see Fig. 1). The power transmission member cover 78 is attached to the motor fixing bracket 58 with a plurality (three in the present preferred embodiment) of fasteners 80.

Referring to Fig. 1 and Fig. 2, the straddled seat 82 and an exterior portion 84 are mounted to the body frame 12.

The straddled seat 82 is at a position higher than the drive motor 54, and is supported by the pair of fourth frames 20c, 20d of the rear frame 20.

The exterior portion 84 includes a top cover 84a located forward of the straddled seat 82, a front fender 84b located forward of the top cover 84a, and a rear fender 84c located behind the top cover 84a to surround the straddled seat 82. The top cover 84a includes a console box 84d attached thereto. The console box 84d is above the battery 56.

According to the vehicle 10 as described, the drive motor 54 and the pair of rear wheels 24a, 24b are connected with each other via the endless power transmission member 76, and the drive motor 54 is located farther forward than the swing arms 38a, 38b. Therefore, in a configuration utilizing the endless power transmission member 76, the layout of the drive motor 54 is not limited by the swing arms 38a, 38b, i.e., it is possible to increase the freedom in the layout of the drive motor 54. Also, the layout of the sprocket 76a is easy, thus making it easy to secure a chain line.

The power transmission member 76 is provided farther inward in the vehicle width direction than the rear frame 20. Therefore, it is possible to make effective use of a space which is outboard of the rear frame 20.

The widthwise length W1 of the drive motor 54 is shorter than the end-to-end length L of the pivot shaft 40. Therefore, it is possible to reduce the dimension of the drive motor 54 in the widthwise direction of the vehicle, thus making it possible to utilize the space on the side of the drive motor 54 effectively.

It is possible to fix the drive motor 54 to the lower frame 16a easily via the motor fixing bracket 58.

By attaching the power transmission member cover 78 directly to the motor fixing bracket 58, it is possible to decrease the number of parts.

Both sides of the drive motor 54 is fixed to the pair of lower frames 16a, 16b. This increases the mounting rigidity of the drive motor 54, thus making it possible to reduce wobble of the drive motor 54. Therefore, it becomes possible to further stabilize operation of the drive motor 54.

The drive motor 54 is located in a region surrounded by the upper frames 14a, 14b, the lower frames 16a, 16b, the front frame 18, and the rear frame 20 in a side view. Therefore, the drive motor 54 is attachable/detachable from a side of the vehicle, i.e., thus making assembly and maintenance operations easy.

In a side view, the drive motor 54 is forward of the rear frame 20. Therefore, it is now possible to locate heavy components at/around the vehicle's center of gravity, and concentrate the mass of the vehicle 10. Also, it is possible to improve the freedom of the size of the drive motor 54 without limitation posed by the swing arms 38a, 38b.

By offsetting the drive motor 54 with respect to the vehicle center, toward the opposite side from the sprocket 76a (rightward in the present preferred embodiment), it becomes possible to increase a layout space on the side of the sprocket 76a without increasing the width of the body frame 12.

Preferred embodiments described above are suitably applied to an ATV.

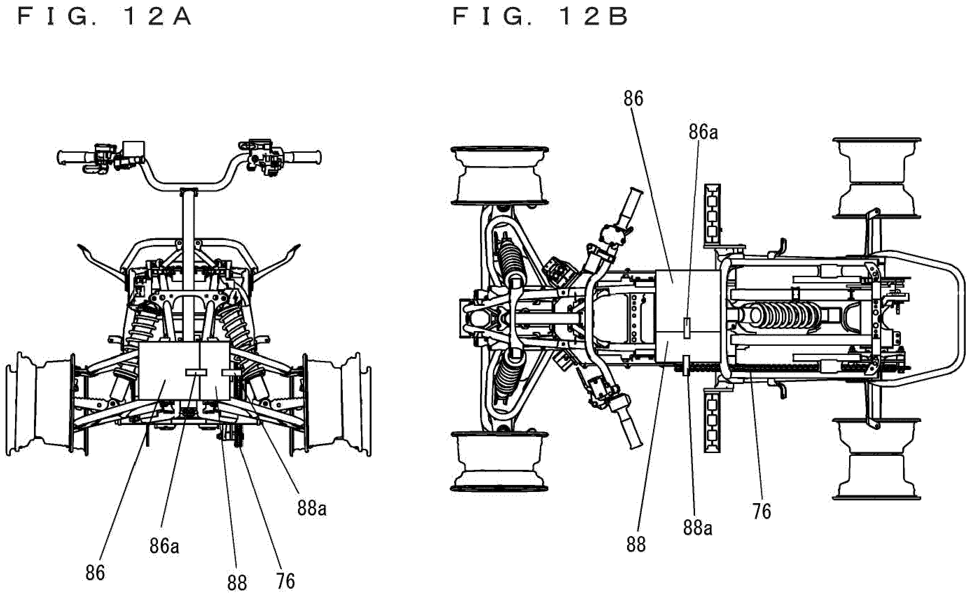

It should be noted here that as will be described below, there may be a transmission provided between the drive motor and the power transmission member. In Fig. 12A through

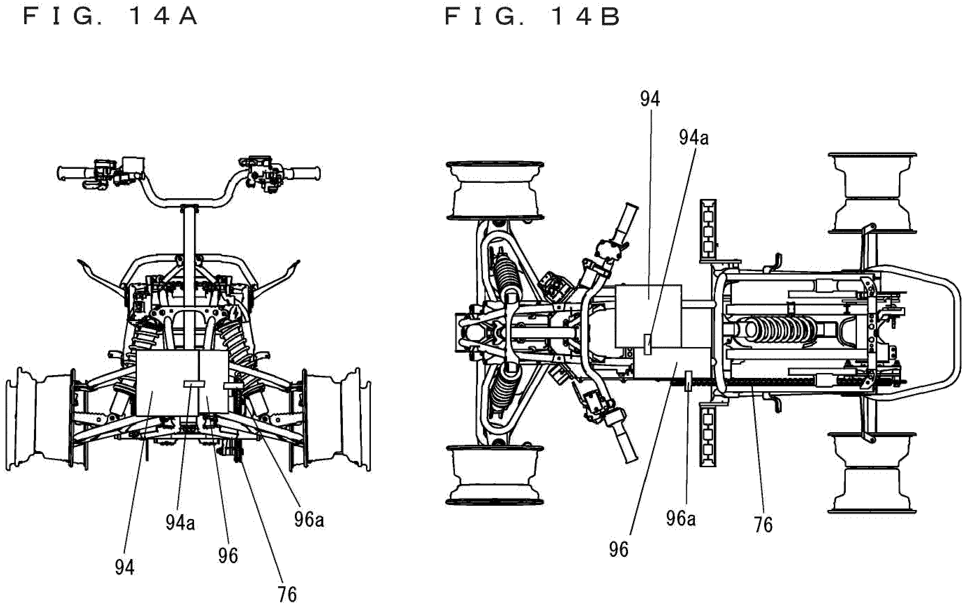

Fig. 14B, a drive motor and a transmission are shown schematically as white rectangles to help understanding of the these structures. Note, however, that the drive motor and the transmission are located in a region surrounded by upper frames, lower frames, a front frame, and a rear frame in a side view. Also, it is preferable that the battery is located at a vacant space within the region in the side view.

In a preferred embodiment shown in Figs. 12A and 12B, a transmission 88 is provided between a drive motor 86 and the power transmission member 76 in order to change the speed of an output from the drive motor 86. The drive motor 86 is offset rightward with respect to the vehicle's center. The drive motor 86 includes an output shaft 86a, which is located leftward of the drive motor 86 and connected with the transmission 88. The transmission 88 is on a left side of the drive motor 86. The transmission 88 includes an output shaft 88a, with which the power transmission member 76 is connected.

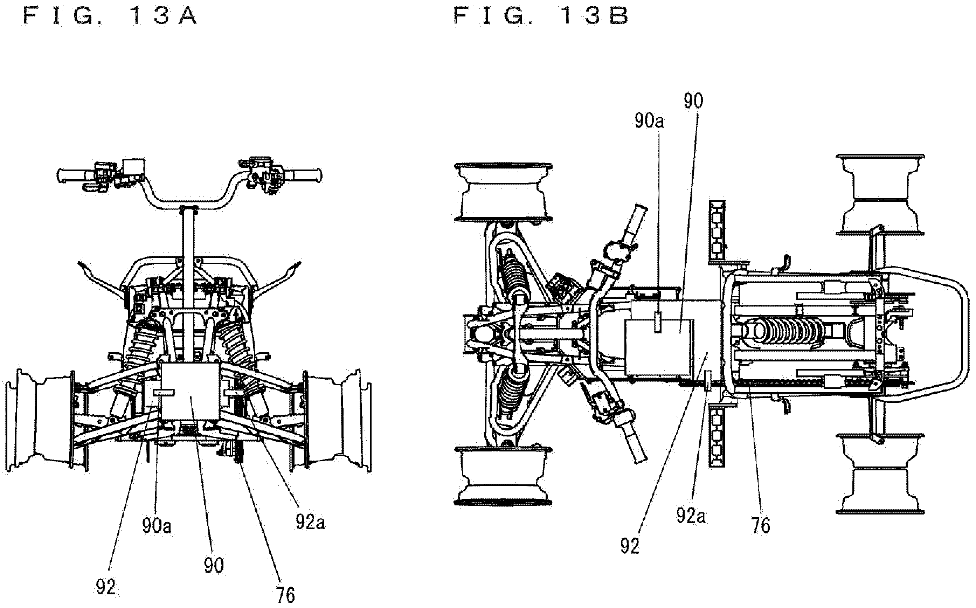

According to the present preferred embodiment, it is possible to utilize the drive motor 86 highly efficiently, and improve electricity consumption and travel distance. Also, the output shaft 88a of the transmission 88 is able to simply be connected directly with the power transmission member 76. Therefore, the arrangement makes it possible to improve the freedom of layout of the drive motor 86. The same advantages are also provided in preferred embodiments shown in Figs. 13A and 13B and Figs. 14A and 14B.

Also, the arrangement allows the drive motor 86 and the transmission 88 to be more compact, and to improve the freedom of layout of the battery and so on. Further, the addition of the transmission 88 does not affect the size of the vehicle, i.e., it is possible to prevent an increase in the total length of the vehicle, and therefore possible to concentrate the mass of the vehicle.

In a preferred embodiment shown in Figs. 13A and 13B, a transmission 92 is provided between a drive motor 90 and the power transmission member 76 in order to change the speed of an output from the drive motor 90. The drive motor 90 is offset leftward with respect to the vehicle's center. The drive motor 90 includes an output shaft 90a, which is located rightward of the drive motor 90. The transmission 92 is positioned at a rightward-and-rearward location of the drive motor 90. The transmission 92 includes an output shaft 92a with which the power transmission member 76 is connected.

According to the present preferred embodiment, it is possible to improve the freedom of layout of the drive motor 90 with respect to the drive sprocket (the sprocket attached to the output shaft 92a) the location of which is limited. Also, it is possible to prevent an increase in the vehicle widthwise dimension. Further, it is possible to increase the freedom of the speed changing ratio.

In a preferred embodiment shown in Figs. 14A and 14B, a transmission 96 is provided between a drive motor 94 and the power transmission member 76 in order to change a speed of an output from the drive motor 94. The drive motor 94 is offset rightward with respect to the vehicle's center. The drive motor 94 includes an output shaft 94a, which is located leftward of the drive motor 94 and connected with the transmission 96. The transmission 96 is positioned on a left side of but slightly rearward than the drive motor 94. The transmission 96 includes an output shaft 96a with which the power transmission member 76 is connected.

According to the present preferred embodiment, it is possible to improve the freedom of layout of the drive motor 94 with respect to the drive sprocket (the sprocket attached to the output shaft 96a) the location of which is limited. Also, it is possible to keep the vehicle widthwise dimension compact. Further, it is possible to increase the freedom of the speed changing ratio.

In preferred embodiments described above, description was made for a case where the vehicle 10 includes a plurality of swing arms 38a, 38b. However, the present teaching is applicable to a vehicle which includes at least one swing arm.

## Claims

1. A vehicle (10) comprising:
a pair of upper frames (14a, 14b) spaced apart in a left-right direction of the vehicle;
a pair of lower frames (16a, 16b) spaced apart in the left-right direction of the vehicle;
a front frame (18) connecting front portions of the pair of upper frames (14a, 14b) with the pair of lower frames (16a, 16b);
a rear frame (20) connecting rear portions of the pair of upper frames (14a, 14b) with rear portions of the pair of lower frames (16a, 16b);
a pair of rear wheels (24a, 24b);
a drive motor (54, 86, 90, 94) to drive the pair of rear wheels (24a, 24b);
a battery (56) configured to supply electric power to the drive motor (54, 86, 90, 94);
an endless power transmission member (76) configured to connect the drive motor (54, 86, 90, 94) with the pair of rear wheels (24a, 24b);
a pivot shaft (40) attached to the rear frame (20) and extending in a widthwise direction of the vehicle; and
at least one swing arm (38a, 38b) supported pivotably by the pivot shaft (40) and supporting the pair of rear wheels (24a, 24b); wherein
the drive motor (54, 86, 90, 94) is located farther forward than the swing arm (38a, 38b) with regard to a fore-aft direction of the vehicle,
**characterized in that**
the drive motor (54, 86, 90, 94) is located in a region surrounded by the upper frames (14a, 14b), the lower frames (16a, 16b), the front frame (18), and the rear frame (20) in a side view of the vehicle, wherein the drive motor (54, 86, 90, 94) is farther forward than the rear frame (20) with regard to the fore-aft direction of the vehicle in a side view of the vehicle, wherein both sides of the drive motor (54, 86, 90, 94) are fixed to the pair of lower frames (16a, 16b), and a first motor fixing bracket (58) is provided between an output side of the drive motor (54, 86, 90, 94) and the lower frame (16a) to fix the drive motor (54, 86, 90, 94) to the lower frame (16a) and a second motor fixing bracket (68) is provided between a non-output side of the drive motor (54, 86, 90, 94) and the lower frame (16b) to fix the drive motor (54, 86, 90, 94) to the lower frame (16b).

2. The vehicle (10) according to claim 1, wherein the power transmission member (76) is located inward of the rear frame (20) in the widthwise direction of the vehicle.

3. The vehicle (10) according to claim 1 or 2, wherein a widthwise length (W1) of the drive motor (54, 86, 90, 94) in the widthwise direction of the vehicle is shorter than an end-to-end length (L) of the pivot shaft (40).

4. The vehicle (10) according to any one of the claims 1 to 3, further comprising a power transmission member cover (78) attached to the first motor fixing bracket (58) to cover the power transmission member (76).

5. The vehicle (10) according to any one of the claims 1 to 4, further comprising a transmission between the drive motor (54, 86, 90, 94) and the power transmission member (76) to change a speed of an output from the drive motor (54, 86, 90, 94).

6. The vehicle (10) according to any one of the claims 1 to 5, further comprising:
a straddled seat (82) provided at a higher position than the drive motor (54, 86, 90, 94) with regard to an upward-downward direction of the vehicle; and
a bar handle (50) provided at a higher position than the straddled seat (82) with regard to an upward-downward direction of the vehicle.

7. The vehicle (10) according to any one of the claims 1 to 6, further comprising:
a body frame (12) having a pair of swing arms (38a, 38b) supported pivotably by the pivot shaft (40) and supporting the pair of rear wheels (24a, 24b).

## Patentansprüche

1. Fahrzeug (10), das umfasst:
ein Paar oberer Rahmen (14a, 14b), die in einer Links-Rechts-Richtung des Fahrzeugs voneinander beabstandet sind;
ein Paar unterer Rahmen (16a, 16b), die in einer Links-Rechts-Richtung des Fahrzeugs voneinander beabstandet sind;
einen vorderen Rahmen (18), der vordere Abschnitte des Paares oberer Rahmen (14a, 14b) mit dem Paar unterer Rahmen (16a, 16b) verbindet;
einen hinteren Rahmen (20), der hintere Abschnitte des Paares oberer Rahmen (14a, 14b) mit hinteren Abschnitten des Paares unterer Rahmen (16a, 16b) verbindet;
ein Paar Hinterräder (24a, 24b);
einen Antriebsmotor (54, 86, 90, 94) zum Antreiben des Paares Hinterräder (24a, 24b);
eine Batterie (56), die so konfiguriert ist, dass sie den Antriebsmotor (54, 86, 90, 94) mit elektrischer Energie versorgt;
ein endloses Kraftübertragungselement (76), das so konfiguriert ist, dass es den Antriebsmotor (54, 86, 90, 94) mit dem Paar Hinterräder (24a, 24b) verbindet;
eine Schwenkwelle (40), die am hinteren Rahmen (20) befestigt ist und sich in Breitenrichtung des Fahrzeugs erstreckt; und
zumindest einen Schwenkarm (38a, 38b), der schwenkbar von der Schwenkwelle (40) gelagert wird und das Paar Hinterräder (24a, 24b) lagert; wobei der Antriebsmotor (54, 86, 90, 94) in Bezug auf die Längsrichtung des Fahrzeugs weiter vorne angeordnet ist als der Schwenkarm (38a, 38b), **dadurch gekennzeichnet, dass** der Antriebsmotor (54, 86, 90, 94) in einem Bereich angeordnet ist, der von den oberen Rahmen (14a, 14b), den unteren Rahmen (16a, 16b), dem vorderen Rahmen (18) und dem hinteren Rahmen (20) in einer Seitenansicht des Fahrzeugs umgeben ist, wobei der Antriebsmotor (54, 86, 90, 94) in Bezug auf die Vor- und Rückwärtsrichtung des Fahrzeugs in einer Seitenansicht des Fahrzeugs weiter vorne liegt als der hintere Rahmen (20), wobei beide Seiten des Antriebsmotors (54, 86, 90, 94) an dem Paar unterer Rahmen (16a, 16b) befestigt sind und eine erste Motorbeschlaghalterung (58) zwischen einer Abtriebsseite des Antriebsmotors (54, 86, 90, 94) und dem unteren Rahmen (16a) vorgesehen ist, um den Antriebsmotor (54, 86, 90, 94) am unteren Rahmen (16a) zu befestigen, und eine zweite Motorbefestigungshalterung (68) ist zwischen einer Nicht-Ausgangsseite des Antriebsmotors (54, 86, 90, 94) und dem unteren Rahmen (16b) vorgesehen, um den Antriebsmotor (54, 86, 90, 94) am unteren Rahmen (16b) zu befestigen.

2. Das Fahrzeug (10) gemäß Anspruch 1, wobei sich das Kraftübertragungselement (76) in Breitenrichtung des Fahrzeugs innerhalb des hinteren Rahmens (20) befindet.

3. Das Fahrzeug (10) gemäß Anspruch 1 oder 2, wobei eine Breitenlänge (W1) des Antriebsmotors (54, 86, 90, 94) in Breitenrichtung des Fahrzeugs kürzer ist als eine End-zu-End-Länge (L) der Schwenkwelle (40).

4. Das Fahrzeug (10) gemäß irgendeinem der Ansprüche 1 bis 3, das ferner eine Antriebsübertragungselementabdeckung (78) umfasst, die an der ersten Motorbefestigungshalterung (58) angebracht ist, um das Kraftübertragungselement (76) abzudecken.

5. Das Fahrzeug (10) gemäß irgendeinem der Ansprüche 1 bis 4, das ferner eine Getriebeeinrichtung zwischen dem Antriebsmotor (54, 86, 90, 94) und dem Kraftübertragungselement (76) umfasst, um eine Drehzahl einer Abgabe des Antriebsmotors (54, 86, 90, 94) zu ändern.

6. Das Fahrzeug (10) gemäß irgendeinem der Ansprüche 1 bis 5, ferner umfassend:
einen Spreizsitz (82), der in Bezug auf die Aufwärts-Abwärts-Richtung des Fahrzeugs an einer höheren Position als der Antriebsmotor (54, 86, 90, 94) vorgesehen ist; und
einen Stangengriff (50), der in Bezug auf die Aufwärts-Abwärts-Richtung des Fahrzeugs an einer höheren Position als der Spreizsitz (82) vorgesehen ist.

7. Das Fahrzeug (10) gemäß irgendeinem der Ansprüche 1 bis 6, ferner umfassend: einen Fahrzeugkörperrahmen (12) mit einem Paar Schwenkarme (38a, 38b), die schwenkbar durch die Schwenkachse (40) gelagert sind und das Paar Hinterräder (24a, 24b) lagern.

## Revendications

1. Véhicule (10) comprenant :
une paire de châssis supérieurs (14a, 14b) espacés en direction gauche-droite du véhicule ;
une paire de châssis inférieurs (16a, 16b) espacés en direction gauche-droite du véhicule ;
un châssis avant (18) connectant les portions avant de la paire de châssis supérieurs (14a, 14b) à la paire de châssis inférieurs (16a, 16b) ;
un châssis arrière (20) connectant les portions arrière de la paire de châssis supérieurs (14a, 14b) aux portions arrière de la paire de châssis inférieurs (16a, 16b) ;
une paire de roues arrière (24a, 24b) ;
un moteur d'entraînement (54, 86, 90, 94) pour entraîner la paire de roues arrière (24a, 24b) ;
une batterie (56) configurée pour fournir de l'énergie électrique au moteur d'entraînement (54, 86, 90, 94) ;
un élément de transmission de puissance sans fin (76) configuré pour connecter le moteur d'entraînement (54, 86, 90, 94) à la paire de roues arrière (24a, 24b) ;
un axe de pivot (40) attaché au châssis arrière (20) et s'étendant en direction de la largeur du véhicule ; et
au moins un bras oscillant (38a, 38b) supporté de manière pivotante par l'axe de pivot (40) et supportant la paire de roues arrière (24a, 24b) ; dans lequel
le moteur d'entraînement (54, 86, 90, 94) est situé plus en avant que le bras oscillant (38a, 38b) par rapport à la direction avant-arrière du véhicule,
**caractérisé en ce que** le moteur d'entraînement (54, 86, 90, 94) est situé dans une région entourée par les châssis supérieurs (14a, 14b), les châssis inférieurs (16a, 16b), le châssis avant (18) et le châssis arrière (20) dans une vue latérale du véhicule, dans lequel le moteur d'entraînement (54, 86, 90, 94) est plus en avant que le châssis arrière (20) par rapport à la direction avant-arrière du véhicule dans une vue latérale du véhicule, dans lequel les deux côtés du moteur d'entraînement (54, 86, 90, 94) sont fixés à la paire de châssis inférieurs (16a, 16b), et un premier support de fixation du moteur (58) est pourvu entre un côté sortie du moteur d'entraînement (54, 86, 90, 94) et le châssis inférieur (16a) pour fixer le moteur d'entraînement (54, 86, 90, 94) au châssis inférieur (16a), et un deuxième support de fixation du moteur (68) est pourvu entre un côté non-sortie du moteur d'entraînement (54, 86, 90, 94) et le châssis inférieur (16b) pour fixer le moteur d'entraînement (54, 86, 90, 94) au châssis inférieur (16b).

2. Véhicule (10) selon la revendication 1, dans lequel l'élément de transmission de puissance (76) est situé à l'intérieur du châssis arrière (20) en direction de la largeur du véhicule.

3. Véhicule (10) selon la revendication 1 ou 2, dans lequel la dimension dans le sens de la largeur (W1) du moteur d'entraînement (54, 86, 90, 94) en direction de la largeur du véhicule est inférieure à la dimension de bout en bout (L) de l'arbre de pivot (40).

4. Véhicule (10) selon l'une quelconque des revendications 1 à 3, comprenant en outre un carénage d'élément de transmission de puissance (78) attaché au premier support de fixation du moteur (58) pour recouvrir l'élément de transmission de puissance (76).

5. Véhicule (10) selon l'une quelconque des revendications 1 à 4, comprenant en outre une transmission entre le moteur d'entraînement (54, 86, 90, 94) et l'élément de transmission de puissance (76) pour changer la vitesse de sortie du moteur d'entraînement (54, 86, 90, 94).

6. Véhicule (10) selon l'une quelconque des revendications 1 à 5, comprenant en outre :
un siège à enfourcher (82) pourvu à une position plus élevée que le moteur d'entraînement (54, 86, 90, 94) par rapport à la direction haut-bas du véhicule ; et
un guidon (50) pourvu à une position plus élevée que le siège à enfourcher (82) par rapport à la direction haut-bas du véhicule.

7. Véhicule (10) selon l'une quelconque des revendications 1 à 6, comprenant en outre :
un cadre (12) comportant une paire de bras oscillants (38a, 38b) supportés de manière pivotante par l'arbre de pivot (40) et supportant la paire de roues arrière (24a, 24b).
